(19) Europäisches Patentamt / European Patent Office / Office européen des brevets

(11) EP 4 058 976 B1

(12) EUROPEAN PATENT SPECIFICATION

(45) Date of publication and mention of the grant of the patent:
07.05.2025 Bulletin 2025/19

(21) Application number: 19805281.3

(22) Date of filing: 15.11.2019

(51) International Patent Classification (IPC):
G06T 5/70 $^{(2024.01)}$      G06T 5/94 $^{(2024.01)}$

(52) Cooperative Patent Classification (CPC):
G06T 5/70; G06T 5/94; G06T 2207/10024;
G06T 2207/30208

(86) International application number:
PCT/EP2019/081554

(87) International publication number:
WO 2021/093980 (20.05.2021 Gazette 2021/20)

(54) **DEVICE AND METHOD FOR PRE-PROCESSING IMAGE DATA FOR A COMPUTER VISION APPLICATION**

VORRICHTUNG UND VERFAHREN ZUM VORVERARBEITEN VON BILDDATEN FÜR EINE COMPUTERSICHTANWENDUNG

DISPOSITIF ET PROCÉDÉ DE PRÉTRAITEMENT DE DONNÉES D'IMAGE POUR UNE APPLICATION DE VISION ARTIFICIELLE

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(43) Date of publication of application:
21.09.2022 Bulletin 2022/38

(73) Proprietors:
• Huawei Technologies Co., Ltd.
  Shenzhen, Guangdong 518129 (CN)
• The Chancellor, Masters and Scholars of the
  University of Cambridge
  Cambridge CB2 1TN (GB)

(72) Inventors:
• MANTIUK, Rafal
  Cambridge The Old Schoolss,Trinity Lane
  Cambridge
  CB2 1TN (GB)
• GIULIANI, Nicola
  80992 Munich (DE)
• CHEN, Hu
  80992 Munich (DE)
• ZHAO, Zhijie
  80992 Munich (DE)

(74) Representative: Roth, Sebastian
  Mitscherlich PartmbB
  Patent- und Rechtsanwälte
  Karlstraße 7
  80333 München (DE)

(56) References cited:
EP-A1- 2 445 214      EP-A1- 3 131 284
US-A1- 2018 075 588

**Description**

TECHNICAL FIELD

The present disclosure generally relates to the field of pre-processing of image data, particularly for computer vision applications. To this end, the present disclosure presents a device that is configured to obtain image data of an image sensor, and to determine a transfer function usable for computer vision applications. The transfer function may be a noise-adaptive transfer function, for example, it may be determined based on the noise profile of the image sensor and/or based on a computer vision application. The present disclosure also provides a corresponding method for pre-processing image data for a computer vision application.

BACKGROUND

Conventional Computer Vision (CV) methods are designed to work with standard dynamic range images, typically represented by gamma-corrected 8-bit color values. In other words, the transfer function is usually determined based on such a gamma curve. Moreover, the images are further produced by a camera's Image Signal Processing (ISP) pipeline, which, may reconstruct color from the Bayer pattern, may further reduce noise, enhance contrast and may tone-map the images. In doing so, the images can be encoded in a standard color space (e.g., BT rec.709 (International Telecommunication Union (ITU) Recommendation ITU-R BT.709)), and can be presented on a display.

However, certain adverse issues arise from the conventional devices and methods As an example, many steps performed in the ISP pipeline may be redundant for some computer vision methods or applications, and may even degrade their performance. Further, tone-mapping may result in clipping of pixel values and contrast distortions that may degrade the performance of many computer vision algorithms.

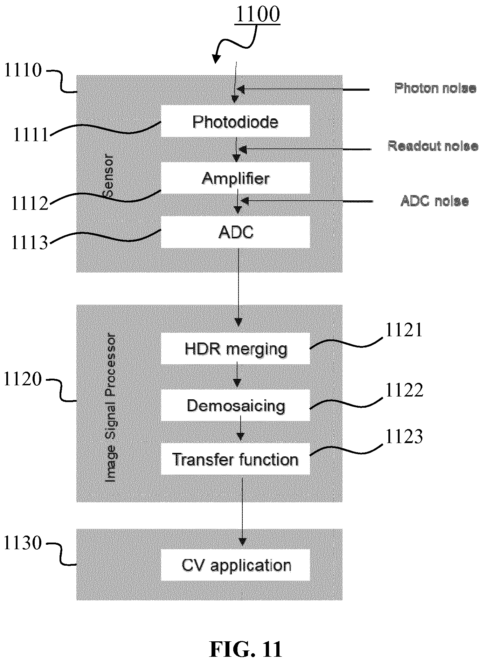

A conventional camera pipeline for computer vision applications is illustrated in FIG. 11.

According to the illustration 1100 depicted in FIG. 11, an image sensor 1110 comprises at least one photodiode 1111, an amplifier 1112 and an Analog to Digital Convenor (ADC) 1113, and provides image data to the image signal processor unit 1120. Moreover, several noises (e.g., photon noise, readout noise, ADC noise) are introduced by the image sensor 1110. The image signal processor unit 1120 comprises a High Dynamic Range (HDR) merging unit 1121, a demosaicing unit 1122, and a transfer function 1223. The image signal processor 1120 generates image data which are provided for the CV application 1130.

The conventional methods apply tone mapping or a transfer function intended to the visualization of images before the image is provided for a computer vision algorithm. Examples of such conventional transfer functions are gamma (for low dynamic range sensors and standardized in BT-709) and Perceptual Quantizer (PQ) (for example, intended for high dynamic range displays and standardized in ST-2084).

However, certain adverse issues arise from the conventional devices and methods. As an example, the transfer functions intended for adapting image data for computer vision applications are not ideally harmonized with the requirements of the (CV) algorithms, and may therefore perform worse, especially in extreme conditions such as low illumination, high noise and high dynamic scene ranges.

EP 3 131 284 describes methods, apparatus and systems for inverse tone mapping of a high dynamic range image. EP 2 445 214 describes video coding using temporally coherent dynamic range mapping.

US 2018/075588 describes an image processing device that includes a luminance acquiring unit and a local tone-mapping unit.

SUMMARY

In view of the above-mentioned adverse issues, the embodiments of the invention aim to improve the conventional devices and methods. An objective is to provide a device and method for pre-processing image data based on a transfer function that provides a more robust signal for computer vision applications. Noise characteristics of the camera should be mitigated (for example, the noise profile of an image sensor of the camera). The device and method should improve the performance of computer vision algorithms that need to operate on the input from high dynamic range sensors.

The objective of the present invention is achieved by the embodiments provided in the enclosed independent claims.

Advantageous implementations of the embodiments are further defined in the dependent claims.

According to a first aspect of the invention, a device for pre-processing image data for a computer vision application is provided. The device is configured to obtain, by means of a channel, image data of an image sensor, wherein the image data comprises an intensity value for each of a plurality of image sensor pixels associated with the channel. The device is further configured to determine a Transfer Function (TF), the TF comprising a first part determined for a first set of the intensity values, and a second logarithmic part determined for a second set of the intensity values, wherein the first part and the second part of the TF are different. The device is further configured to apply the first part of the TF to the first set of the intensity values, and to apply the second logarithmic part of the TF to the second set of the intensity values, in order to obtain transformed image data.

The device may be, or may be incorporated in, a computer vision digital camera, a digital video recorder, a mobile phone, a smartphone, a play station, an augmented reality device, a virtual reality device, a personal computer, a desktop computer, a laptop and a notebook computer, a tablet or a pad device, an image signal processing module of an imaging device, a part of an optical flow generation for an ISP of an imaging device, a camera module of a high dynamic range imaging device, etc.

The first set of intensity values may comprise one continuous intensity range or several continuous intensity ranges. Accordingly, the second set of intensity values may comprise one continuous intensity range or several continuous intensity ranges. According to some embodiments, the first set of intensity values is a first continuous intensity range and/or the second set of intensity values is a second continuous intensity range. According to some embodiments, however, the first set of intensity values may comprise a plurality of discrete intensity values. According to some embodiments, the second set of intensity values may comprise a plurality of discrete intensity values.

The device obtains the image data of the image sensor. Moreover, the device determines the TF. The TF may be a function that maps intensity values to encoded values, i.e. each intensity value to an encoded value. The first part of the TF may have, in a logarithmic-representation, wherein a logarithmic scale is used along the x-axis that indicates the intensity values, a lower slope than the second part of the TF. The first part of the TF may be determined for the intensity range that is strongly affected by noise (e.g., having a low Signal to Noise Ratio (SNR)). The second logarithmic part of the TF may be determined based on a logarithmic mapping that may be desirable in the well-exposed (high SNR) portion of the intensity range as it can discount illuminant in gradient fields (e.g., since many computer vision algorithms rely on gradients).

In some embodiments, the TF may be determined based on an Opto-electrical and Electro-Optical Transfer Functions (OETF). For example, the device may determine the TF (e.g., the first part of the TF and the second part of the TF) based on an OETF curve.

The image sensor may be any image sensor, for example, it may be a Charge-Coupled Device (CCD) image sensor, a Complementary Metal-Oxide Semiconductor (CMOS), etc.

In some embodiments, the determined TF may be adapted to the noise profile of each type of camera sensor, i.e., the device may determine the TF, e.g. once for each type of the camera's image sensor (i.e., not for each specific sensor of the same camera sensor). For example, the TF is determined for the fixed or the preset configuration of the camera's image sensor. In other words, the TF determination may not be based on a dynamic adaptation at a later stage for a specific camera sensor.

Hereinafter, the terms "transform" and "transfer function" are used interchangeably, without limiting the present disclosure. Moreover, the terms "segment" and "part" are also used interchangeably, without limiting the present disclosure.

The device of the first aspect provides the advantage of (consistently) improving the performance of computer vision algorithms, specifically regardless of the dynamic range of the input and capture conditions (noise and illumination levels). This is achieved by the TF, which lets the computer vision algorithms perform better than a conventional TF. In particular, this may be an advantage over conventional devices, in which traditional ISP pipelines are designed for best visual quality, which does not necessarily lead to better performance for computer vision methods.

The device may comprise a circuitry. The circuitry may comprise hardware and software. The hardware may comprise analog or digital circuitry, or both analog and digital circuitry.

In some embodiments, the circuitry comprises one or more processors and a non-volatile memory connected to the one or more processors. The non-volatile memory may carry executable program code which, when executed by the one or more processors, causes the device to perform the operations or methods described herein.

In an implementation form of the first aspect, based on a logarithmic scale, a slope of the TF in the first part is smaller than a slope of the TF in the second logarithmic part.

Using such a TF improves the performance of computer vision algorithms/applications, specifically regardless of the dynamic range.

In particular, the device may determine, for the first part of the TF, a different (type of) function from the second part of the TF. Moreover, the first of the TF may comprise a smaller slope (in logarithmic depiction), which may have the advantage of reducing noisy contributions to computer vision. The logarithmic scale relates to the logarithmic representation of the TF described above. That is, the logarithmic scale may be used for the x-axis indicating the intensity values.

In a further implementation form of the first aspect, the first part of the TF is based on a logarithmic function.

In particular, the determined TF may be a noise-adaptive logarithmic transform which may have two-segment logarithmic transforms.

For example, the TF is based on a divided TF, which may comprise the first logarithmic part and the second logarithmic part, such that the first logarithmic part may comprise a reduced slope. Using such a TF significantly improves the performance of computer vision algorithms/applications.

In a further implementation not covered by the claims, but useful example for understanding the invention, the first part of the TF is based on a noise-variance stabilizing function. Using such a TF, the performance of computer vision algorithms/applications can be optimized.

In particular, the determined TF may be a noise-adaptive logarithmic transform which may have two segments including the first part being a noise-variance stabilizing transform and the second part being a logarithmic part.

In a further implementation form of the first aspect, the first part of the TF is a constant value.

This provides a simple implementation of the TF. In particular, the first part of the TF is zero.

The above-described implementation forms regarding the TF functions improve the performance of computer vision applications.

In a further implementation form of the first aspect, the device is further configured to determine a threshold intensity value dividing the TF into the first part and the second part of the TF based on a SNR threshold.

The SNR threshold may be determined based on a sensor noise profile. The threshold intensity value may be determined such, that the intensity values related to the first part of the TF are intensity values having a SNR below the SNR threshold, and the intensity values related to the second part of the TF are intensity values having a SNR above the SNR threshold.

In a further implementation form of the first aspect, the SNR threshold has a value within the range of -3dB and +3dB.

This SNR range has proven advantageous for improving the performance of computer vision algorithms/applications.

In a further implementation form of the first aspect, the TF is determined based on a noise profile of the image sensor.

In a further implementation form of the first aspect, the SNR threshold is obtained based on a noise profile of the image sensor.

The noise profile of the image sensor may indicate how much noise is produced by the image sensor, in the pixels, at different image sensor settings. The noise profile may be modelled based on a noise model, and/or may be measured, and/or may be provided by a provider/manufacturer of the image sensor. For example, the noise profile of the image sensor may be determined based on testing different SNR values and selecting the SNR value that leads to the best performance of the target CV application. In this way, the TF can be adjusted to the image sensor for achieving improved performance.

In particular, the noise profile of the image sensor may be determined based on (or may include) the photon noise, the read-out noise and the ADC noise, etc.

In a further implementation not covered by the claims, but useful example for understanding the invention, the SNR threshold is further obtained based on a type of the computer vision application and/or a gain parameter of the image sensor.

This allows customizing the TF to the type of computer vision application (algorithm) for achieving improved performance.

In summary, the above-described implementation forms regarding the SNR threshold improve the performance of computer vision applications.

In a further implementation form of the first aspect, the device is further configured to introduce a smoothing function to the TF for extending the threshold intensity value to a threshold range comprising a first lower threshold and a first upper threshold. Hereby, the smoothing function is for substituting the TF in the threshold range. Further, the substitution of the TF in the threshold range by the smoothing function induces the TF to be differentiable for any intensity values.

The smoothing function may comprises any function that is capable of smoothing the TF, in particular of smoothing the transition of the TF from the first part to the second part. As mentioned above, the first part and the second part of the TF are different, in particular may have different slopes, so that an abrupt transition may occur. Applying the smoothing function may make this transition less abrupt, and can thus further improve the performance of the computer vision application.

In a further implementation form of the first aspect, the smoothing function is based on a cubic function.

In a further implementation form of the first aspect, the device is further configured to obtain a ratio of the first part to the second part of the TF, wherein whether the substitution of the TF in the threshold range by the smoothing function occurs depends on the ratio of the first part to the second part of the TF.

In a further implementation form of the first aspect, the device is further configured to apply an inverse logarithmic TF to the transferred image data for obtaining image data or video data in a determined format according to the computer vision application.

In a further implementation form of the first aspect, the device is implemented in one of:

- an Image Signal Processing (ISP) module of an imaging device,

- a part of an optical flow generation for an ISP of an imaging device,
- a camera module of a High Dynamic Range (HDR) imaging device.

A second aspect of the invention provides a method for pre-processing image data for a computer vision application. Hereby, the method comprises the step obtaining, by means of a channel, image data of an image sensor, wherein the image data comprises an intensity value for each of a plurality of image sensor pixels associated with the channel. The method further comprises the step determining a Transfer Function (TF), the TF comprising a first part determined for a first set of the intensity values, and a second logarithmic part determined for a second set of the intensity values, wherein the first part and the second logarithmic part of the TF are different. The method further comprises the step applying the first part of the TF to the first set of the intensity values and applying the second logarithmic part of the logarithmic TF to the second set of the intensity values for obtaining transformed image data.

In an implementation form of the second aspect, based on a logarithmic scale, a slope of the TF in the first part is smaller than a slope of the TF in the second logarithmic part.

In a further implementation form of the second aspect, the first part of the TF is based on a logarithmic function.

In a further implementation not covered by the claims, but useful example for understanding the invention, the first part of the TF is based on a noise-variance stabilizing function.

In a further implementation form of the second aspect, the first part of the TF is a constant value.

In a further implementation form of the second aspect, the method further comprises determining a threshold intensity value dividing the TF into the first part and the second part of the TF based on a SNR threshold.

In a further implementation form of the second aspect, the SNR threshold has a value within the range of -3dB and +3dB.

In a further implementation form of the second aspect, the TF is determined based on a noise profile of the image sensor.

In a further implementation form of the second aspect, the SNR threshold is obtained based on a noise profile of the image sensor.

In a further implementation not covered by the claims, but useful example for understanding the invention, the SNR threshold is further obtained based on a type of the computer vision application and/or a gain parameter of the image sensor.

In a further implementation form of the second aspect, the method further comprises introducing a smoothing function to the TF for extending the threshold intensity value to a threshold range comprising a first lower threshold and a first upper threshold, wherein the smoothing function is for substituting the TF in the threshold range, and wherein the substitution of the TF in the threshold range by the smoothing function induces the TF to be differentiable for any intensity values.

In a further implementation form of the second aspect, the smoothing function is based on a cubic function.

In a further implementation form of the second aspect, the method further comprises obtaining a ratio of the first part to the second part of the TF, wherein whether the substitution of the TF in the threshold range by the smoothing function occurs depends on the ratio of the first part to the second part of the TF.

In a further implementation form of the second aspect, the method further comprises applying an inverse logarithmic TF to the transferred image data for obtaining image data or video data in a determined format according to the computer vision application.

In a further implementation form of the second aspect, the method is implemented in one of:

- an ISP module of an imaging device,
- a part of an optical flow generation for an ISP of an imaging device,
- a camera module of an HDR imaging device.

The method of the second aspect and its implementation forms provide the same advantages and effects as the device of the first aspect and its respective implementation forms.

A third aspect of the invention provides a computer program which, when executed by a computer, causes the method of second aspect (and/or one of the implementation form of the second aspect) to be performed.

The computer program of the third aspect and its implementation forms provides the same advantages and effects as the device of the first aspect and its respective implementation forms.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

BRIEF DESCRIPTION OF THE DRAWINGS

The above described aspects and implementation forms of the present invention will be explained in the following description of specific embodiments in relation to the enclosed drawings, in which

FIG. 1         is a schematic view of a device for pre-processing image data for a computer vision application, according to an embodiment of the present invention;

FIG. 2         is a schematic view of a system for determining a noise profile for the device;

FIG. 3         is a schematic view of a diagram comprising a checkerboard pattern used for obtaining a logarithmic transform with illumination-invariant gradients;

FIGS. 4A-B    show examples of the designed OETF curves for determining a noise-adaptive transfer function;

FIG. 5         shows an example of smoothing the two segments of an exemplary designed OETF curve;

FIG. 6         which is a schematic view of the device comprising a TF used in an image signal processing pipeline of a camera according to an embodiment of the present invention;

FIG. 7         is a flowchart of a procedure for determining the OETF component;

FIG. 8         is a schematic view of the device comprising a TF used for generating optical flows for Bayer-pattern raw data according to an embodiment of the present invention;

FIG. 9         is a schematic view of the device comprising a TF used on the sensor side and in a camera module for performing a bit depth compression according to an embodiment of the present invention;

FIG. 10        is a flowchart of a method for pre-processing image data for a computer vision application according to an embodiment of the present invention; and

FIG. 11        illustrates a conventional camera pipeline for computer vision applications.

DETAILED DESCRIPTION OF THE EMBODIMENTS

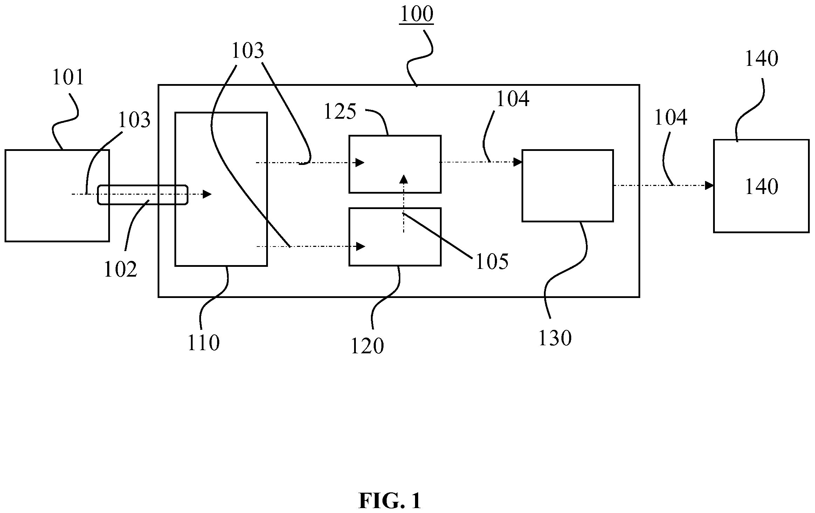

FIG. 1 is a schematic view of device 100 for pre-processing image data 103 for a computer vision application 140 according to an embodiment of the present invention.

The device 100 may be, or may be incorporated in, a computer vision digital camera, a digital video recorder, a mobile phone, a smartphone, an image signal processing module of an imaging device, a part of an optical flow generation for an ISP of an imaging device, a camera module of a high dynamic range imaging device, etc.

The device 100 is configured to obtain, by means of a channel 102, image data 103 of an image sensor 101, wherein the image data 103 comprises an intensity value for each of a plurality of image sensor pixels associated with the channel 102. As can be deduced from FIG. 1, the channel 102 may be adapted to interconnect the image sensor 101 and the device 100. For obtaining the image data 103 of the image sensor 101, the device 100 may comprise an image data reception unit 110.

The device 100 is further configured to determine a TF 105. For doing so, the device 100 may comprise a transfer function determination unit 120. The TF 105 determined by the transfer function determination unit 120 may comprise a first part 121 determined for a first set of the intensity values, and a second logarithmic part 122 determined for a second set of the intensity values, wherein the first part 121 and the second part 122 of the TF 105 are different. The determined TF 105 may then be provided to a transfer function application unit 125, wherein transfer function application unit 125 may be adapted to apply the transfer function to the image data 103. In doing so, transformed image data 104 may be obtained.

The TF 105 may be a noise-adaptive transfer function determined for a specific computer vision application 140.

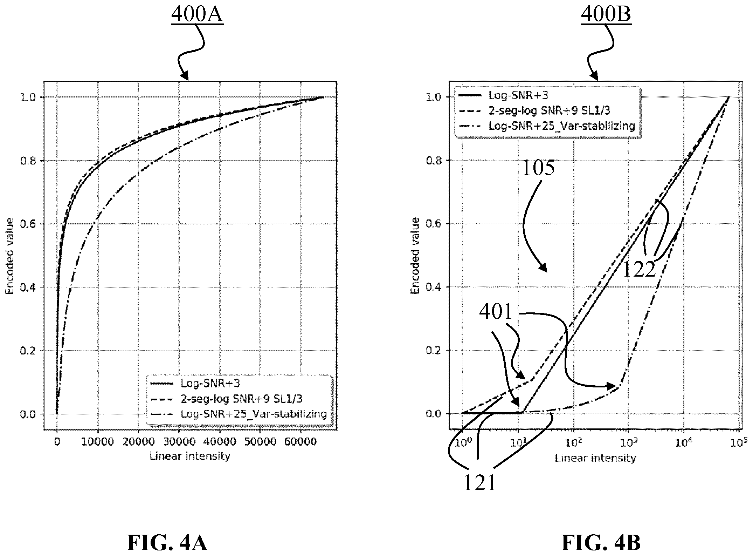

The TF 105 comprising a first part 121 determined for a first set of the intensity values. For example, the first part 121 of the TF 105 may have, in a logarithmic (log)-representation, wherein the intensity values are plotted using a logarithmic scale on the x-axis and the encoded values are plotted using a linear scale on the y-axis (see e.g., FIG. 4B), a lower slope (compared to the second part 122 of the TF 105) and may be determined for the intensity range of the intensity values that is strongly affected by noise (e.g., having a low SNR).

The second logarithmic part 122 of the TF 105 determined for the second set of the intensity values having high SNR. Moreover, the first part and the second part of the TF are different.

The device 100 is further configured to apply the first part 121 of the TF 105 to the first set of the intensity values and apply the second logarithmic part 122 of the TF 105 to the second set of the intensity values, in order to obtain transformed image data. As can be deduced from FIG.1, such way of applying the TF 105 to the image data 103 may be performed by the transfer function application unit 125. Hereby, applying the TF 105 to the image data 103 may enable to obtain transformed image data 104, which may be forwarded to an output unit for transformed image data 130. The transformed image data 104 forwarded to the output unit for transformed image data 130 may then be provided to the computer vision application 140.

For example, the device 100 may adapt the transfer function 105 to the noise characteristic of the image sensor 101 such that it relies on logarithmic mapping for better invariance to illumination.

Furthermore, the device 100 may adaptively select the logarithmic mapping in order to make the best use of the available bit-depth of the encoded values. Also, the logarithmic mapping can be combined with noise-variance stabilizing methods, too.

Optionally, the device 100 may determine a transfer function 105 for encoding color and luma values that may improve the performance of computer vision methods. In the first order, the focus is a transfer function for encoding linear intensity values into integer values, which are suitable input to computer vision methods.

The device 100 may comprise a circuitry (not shown in FIG. 1). The circuitry may comprise hardware (for example, a camera, an image sensor, a memory, a central processing unit, etc.) and software (for example, an image processing software, a video processing software, a computer vision application, etc.). The hardware may comprise analog or digital circuitry, or both analog and digital circuitry. In some embodiments, the circuitry comprises one or more processors and a non-volatile memory connected to the one or more processors. The non-volatile memory may carry executable program code which, when executed by the one or more processors, causes the device to perform the operations or methods described herein.

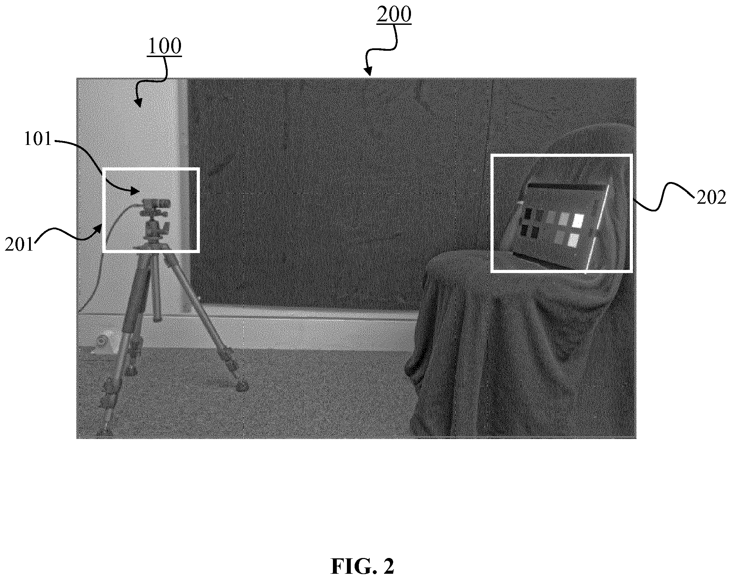

Reference is made to FIG. 2 which is a schematic view of a system 200 for determining a noise profile for the device 100. For example, a noise profile for an image sensor 101 of the device 100 may be determined.

The system 200 may be based the device 100, or the device 100 may be incorporated in the system 200. Without limiting the present disclosure, in following it is assumed that the device 100 is incorporated in the system 200. Moreover, the device 100 is exemplarily based on (e.g., comprising) a computer vision digital camera 201 (for example, it comprises the CV digital camera 201 which comprises the image sensor 101). The system 200 further comprises a light box 202 with square calibration targets of different light emission (right) used to measure the noise characteristic.

Determining the noise profile of the device 100 may be, for example, estimating a noise profile of the image sensor 101 of the digital camera 201 of the device 100, estimating different parameters of the TF 105, etc.

Different computer vision methods may be robust to the noise (e.g., photon noise, read-out noise and ADC noise, etc.) introduced by the image sensor 101. The system 200 (and/or the device 100) is configured to consider the introduced noises when determining the transfer function 105 and to simulate different exemplary cameras 201 (for several relevant cameras) under different illumination levels. For example, a model (e.g., a noise profile of the image sensor) for the camera noise characteristics may be determined, and the required parameters for the determined model may be estimated. A list of the symbols used for determining the noise model are presented in table I.

*Table I: List of used symbols for noise model*

| | |
|---|---|
| $\Phi$ | electrons per second collected by the sensor |
| $k_c$ | Per-channel coefficient that converts the number of electrons for each channel to the digital value in the RAW image. c can be r or g or b, standing for R,G,B color channels |
| n | a normally distributed random variable that models noise |
| t | Exposure time |
| g | Sensor gain |
| $Y_{max}$ | the maximum value that can be registered by a sensor |
| $\sigma^2_{read}$ | Readout noise |
| $\sigma^2_{adc}$ | Noise caused by analog-to-digital conversion and quantization |

It is assumed that the image sensor 101 of the camera 201 collects Φ electron per second. Moreover, if the gain of the image sensor being g, the image sensor's readout for the color channel of c (c∈ {R,G,B}) over the exposure time t may be estimated according to Eq. (1):

$$Y_c = \min\{k_c(\Phi tg + n), Y_{max}\}, \qquad \text{Eq. (1)}$$

where the coefficient $k_c$ may account for any digital gain and the white balance correction applied after the charge has been converted into digital units. The symbol n is a normally distributed random variable that models the noises (for example, the photon noise, the read out noise and the ADC noise).

Furthermore, the variance of the noises may be modelled according to Eq. (2):

$$\sigma_c^2(Y_c) = Y_c g k_c + \sigma_{read}^2 g^2 + \sigma_{adc}^2, \qquad \text{Eq. (2)}$$

In order to measure the parameters for the camera 201, a series of images of a calibration target are captured. The calibration target comprises a light box 202 covered by a cardboard with square cutouts, which are covered by a combination of neutral density filters (for example, the recommended densities may be 0, 0.6, 1.1, 1.7, 2.2, 2.8, 3.3, and 3.9). The camera's exposure time and the gain are adjusted so that the brightest square (ND 0) is registered close to the maximum digital value in the image but isn't saturated. In the image series, the gain is gradually increased and compensated for increased pixel values by shortening the exposure time, in which five images are taken for each exposure/gain pair.

Table II presents the estimated noise parameters fitted for several exemplary cameras (without limiting the present disclosure to a specific camera, a specific image sensor, etc.). All camera RAW images assumed to be 16 bit in order to perform an easier comparison.

*Table II: Noise parameters fitted for several exemplary cameras.*

| Camera | Color Coefficients | | | $\sigma_{read}$ | $\sigma_{adc}$ |
| --- | --- | --- | --- | --- | --- |
| | $k_r$ | $k_g$ | $k_b$ | | |
| Sony α7r1 | 2.236 | 1.32 | 5.776 | 3.198 | 6.601 |
| Sony α7r3 | 2.235 | 1.452 | 5.633 | 0 | 7.687 |
| Canon T1i | 4.336 | 2.564 | 9.482 | 0.023 | 52.47 |
| IDS UI-314x | 13.68 | 9.883 | 8.902 | 0.5704 | 1.352 |

The device 100 (and/or the system 200) may further determine the transfer function 105. In the following, several exemplary procedures for determining the transfer function 105 are presented.

A majority of camera sensors, including CCD and CMOS, exhibits a linear response to light, i.e., they count the number of incoming photons and register values that are linearly related to radiometric quantities (irradiance). Furthermore, since the linear color values are strongly perceptually non-uniform and require high bit-depths to store, they are typically tone-mapped into a gamma-corrected representation. The cameras are designed to capture visually pleasant content typically use S-shaped tone-curves, mimicking the response of an analog photographic film. Computer vision cameras more often apply a transfer power function with the exponent less than 1, commonly known as "gamma".

According to exemplary measurements performed by the system 200 (including the device 100), it may be stated that the although such gamma encoding is suitable for sensors of moderate dynamic range, and for standard displays, this is not the best choice for the image sensors of higher dynamic range and when the images are intended for computer vision methods rather than for viewing.

In following, several types of transfer functions are described, for example, the device 100 may determine the TF 105 based on one of the following procedures.

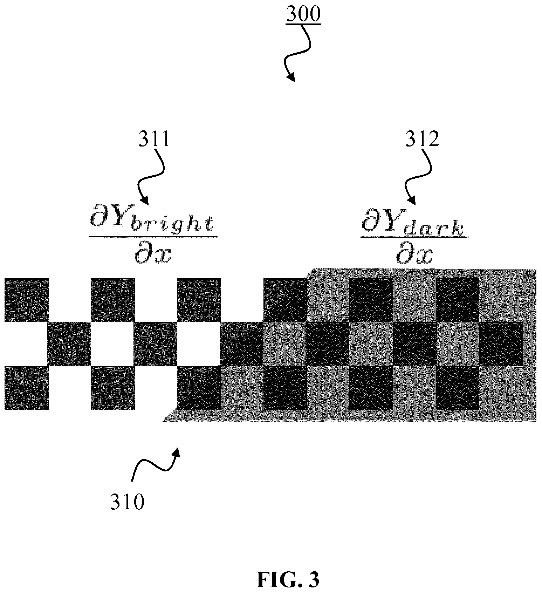

Reference is now made to FIG. 3, which is a schematic view of a diagram 300 comprising a checkerboard pattern 310 used for obtaining a logarithmic transform with illumination-invariant gradients.

The checkerboard pattern 310 is directly illuminated on the left side 311 and in shadow on the right side 312. Moreover, when computing the gradients (e.g., the partial derivative) by the system 200 (and/or the device 100), it is determined that the partial derivatives will be different for both sides when computed in a linear color space.

A large portion of computer vision methods does not operate directly on pixel values but rather on gradients. For example, the classical descriptors, such as the Scale-Invariant Feature Transform (SIFT) or the Histogram of Oriented Gradients (HOG), compute histograms of gradient magnitudes and orientations. The first convolutional layers in deep neural networks often extract features that represent differences between neighboring pixels. Therefore, preserving gradient values across the range of illumination conditions is considered to be a desirable property of color encoding for computer vision.

In diagram 300 of FIG. 3, in which the checkerboard 310 is directly illuminated on one side and in a shadow on the other. Generally, the partial derivatives are different for both sides of the pattern when computed for linear color values. However, if the derivatives are computed for the logarithms of linear values, the partial derivatives are the same. In other words, the gradients stay the same regardless of illumination. Based on this analysis, linear camera color values are supposed to be encoded in the logarithmic domain to improve the performance of gradient-based computer vision methods.

However, the logarithmic transform may strongly enhance the low color values, which are most affected by the noise. This may introduce strong inconsistencies in the level of noise, and may further break another common assumption of computer vision methods, as will be discussed below.

The device 100 may determine the TF 105 which may be based on a noise-variance stabilizing transform. For example, the TF 105 (e.g., the first part 121 of the TF 105) may be based on the noise-variance stabilizing transform (the noise-variance TF).

For instance, some computer vision algorithms assume that the camera noise (i.e., the photon noise, the ADC noise, the readout noise) is normally distributed and has a constant variance across the intensity range. This assumption is a reasonable approximation for gamma-corrected 8-bit images, but it may not be used for linear color values coming directly from a camera's image sensor. However, it may be possible to transform the captured linear values into the code space with uniform variance using a noise-variance stabilizing transform.

Moreover, the device 100 may determine (e.g., by means of the noise profile estimated according to FIG. 2) the noise-variance stabilizing transform (for example, which may be the first part 121 of the TF 105) according to Eq. (3):

$$E_c(Y_c) = \frac{\sqrt{Y_c g k_c + \sigma_{read}^2 g^2 + \sigma_{adc}^2}}{\sqrt{Y_{max} g k_c + \sigma_{read}^2 g^2 + \sigma_{adc}^2}} \qquad \text{Eq. (3)},$$

where the $E_c(Y_c)$ is the TF 105

Reference is now made to FIG. 4A and FIG. 4B, which show examples of the designed OETF curves for determining a noise-adaptive transfer function.

For example, the device 100 may determine a noise-adaptive transfer function 105 based on the OETF curves.

A logarithmic TF may keep the gradients under different illumination but it may lead to stronger noise artefacts for low pixel values. The device 100 may determine a noise-adaptive transfer functions 105 such that it has two parts comprising the first part 121 of the TF 105 and the second part 122 of the TF 105 which are different for the low and the high pixel values. The first part 121 of the TF 105 and the second part 122 of the 105 may be separated by the threshold value 401. Furthermore, the determined TF 105 may be the same for all the three color channels R, G, B if a single noise profile is measured for all R, G, B pixels together. The transfer function (TF 105) may also be separated for R, G, B, if a noise profile is measured for each of the color channel. Examples of all the three variants of the proposed OETFs are shown in diagram 400A of FIG.4A and diagram 400B of FIG.4B.

In the diagram 400A of FIG.4A and the diagram 400B of FIG.4B, the curve indicated by "Log-SNR+3" is a logarithmic curve with threshold of 3dB. The curve indicated by "2-seg-log SNR+9 SL1/3" is a two segment logarithmic curve with threshold of 9dB in SNR and the ratio between two slopes is 1 to 3. Moreover, the curve indicated by "Log-SNR+25_Var-stablizing" is a combination of logarithmic and variance-stabilizing method with a threshold of 25dB in SNR.

The diagram 400A of FIG.4A refers to encoded value vs linear intensity, whereas the diagram 400B of FIG.4B refers to encoded value vs logarithmic of the intensity values. They are equivalent. Furthermore, the linear intensity values are pixel values in R or G or B.

For instance, while a logarithmic TF preserves gradients, it may also enhance the noise. The device 100 may determine the TF 105 by using a logarithmic TF only for the digital values that are above a certain SNR and clamp to zero the values that are too noisy to be useful for a computer vision application. The choice of an SNR threshold may offer a trade-off between using higher precision to represent high digital values and clipping a certain portion of the lower digital range.

The device 100 may determine the TF 105 according to Eq. (4), as follows:

$$E_{log-snr-x}(Y) = \begin{cases} 0, & Y < T \\ (\log(Y) - \log(T)) \cdot s \ , & Y \geq T \end{cases} \qquad \text{Eq. (4)}$$

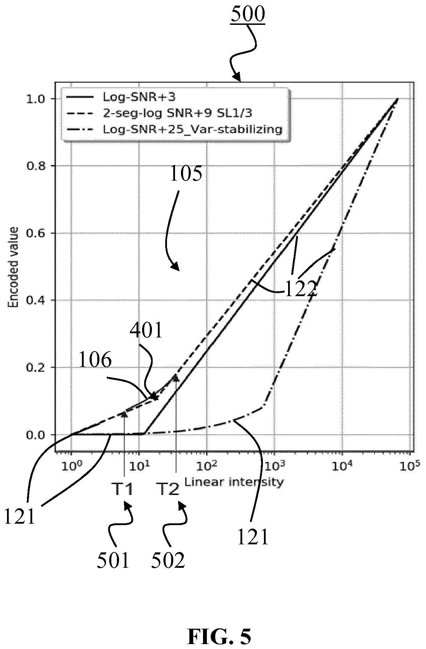

Here, the first part 121 (0) of the TF 105 ($E_{log-snr-x}(Y)$) is determined for $Y < T$ (indicated with reference number 401 in FIG. 4 and FIG. 5), and the second part 122 ((log(*Y*) - log(*T*))·*s*) of the TF 105 (*E*<sub>log-snr-x</sub>(*Y*)) is determined for $Y \geq T$ 401.

The symbol s is a scale factor which ensures that the maximum output value of the transfer function is 1: Eq. (5):

$$s = \frac{1}{\log(Y_{max}) - \log(T)} \qquad \text{Eq. (5)}$$

The symbol x stands for SNR threshold and the T is the corresponding threshold for pixel values and their relationship may be obtained according to Eq. (6):

$$x = 10 log_{10} \frac{T^2}{\sigma^2(\text{T})} \qquad \text{Eq. (6)}$$

The SNR threshold x is to be set based on sensor noise profile and the application. Recommended value range is [-3dB, +3dB]. Given x, T 401 can be computed using an inverse operation.

Furthermore, considering the logarithmic function, herein, a natural log is written for simplicity. Also, a logarithmic function with any basis value, like log2 or log10 may also work, and the output of the transfer function 105 may be the same no matter which logarithmic basis is taken.

Additionally, the input value Y here can either represent the luminance value or the value of one color channel, R or G or B. For simplicity, the subscript of c for color channels is omitted.

Besides, a limitation of the noise-adaptive transfer function determined based on Eq. (4) may be that the values below the SNR threshold are set to zero and (all) information being lost. Still, some computer vision algorithms can extract information even from such very noisy signal. Therefore, it is desirable to preserve even the low SNR range. However, allocating too large range in the encoded values to the noisy part of the intensity range would reduce contrast in the brighter part of the intensity range, and lower performance of the computer vision algorithms in that range. Therefore, in some embodiments, the device 100 may split the TF 105 into two logarithmic segments (i.e., the first part 121 of the TF 105 determined for the low-SNR segment (low intensity values) and the second part 122 of the TF 105 determined for the high-SNR segment (high intensity values) are both logarithmic functions.

Moreover, the transition between the two parts is selected (e.g., as before) based on the SNR threshold. The slopes of the logarithmic mapping functions may be selected so that the slope of the high-SNR segment is N times of the slope of the low-SNR segment, where N may be any value large than 1 (for example, N=10 is recommended). The slope refers to the tangent of the mapping function in the log-linear coordinates. For example, the device 100 may determine the TF 105 (*E*<sub>2seg-log</sub>(*Y*)) according to Eq. (7):

$$E_{2seg-log}(Y) = \begin{cases} 0, & Y = 0 \\ \log(Y) \cdot r \cdot s, & Y < T \\ (\log(Y) - \log(T) \cdot (1-r)) \cdot s, & Y \geq T \end{cases} \qquad \text{Eq. (7)}$$

where, the symbol s (the scale factor) may be estimated according to Eq. (8) as follow:

$$s = \frac{1}{(\log(Y_{max}) - \log(T)) \cdot (1-r)} \qquad \text{Eq. (8)}$$

and where r is the preset ratio of the first segment log curve slope and the second segment log curve slope. This value may be adjusted by the device (i.e., the user of device) based on image sensors and the CV applications. For example, the recommended value is 0.1.

Here, the TF 105 (*E*<sub>2seg-log</sub>(*Y*)) comprises the first part 121 (log(*Y*) ·*r*·*s*) that is determined for $Y < T$ (indicated with reference number 401 in FIG. 4 and FIG. 5), and the second part ((log(*Y*) - log(*T*) · (1 - *r*)) ·*s* ) that is determined for $Y \geq T$ 401.

One potential issue of, determining the TF 105 based on the two parts logarithmic curve may be that the transfer function 105 is incontinuous at the conjunction point T 401. The slope of the second part (being used for determining the second part 122 of the TF 105) is generally a few times higher than the first part (being used for determining the first part 121 of the TF 105), and thus the transition at T 401 is rather abrupt.

Therefore, the device 100 may extend the two parts logarithmic transform (TF) with a smooth transition between two parts. For example, the device 100 may introduce a smoothing function 106 (e.g. a cubic function) for this purpose and may further fit in with the two segments at a first lower threshold (T<sub>1</sub>) 501 and a first upper threshold (T<sub>2</sub>) 502. The values of the first lower threshold (T<sub>1</sub>) 501 and the first upper threshold (T<sub>2</sub>) 502 can be chosen freely, subject to the conditions that T<sub>1</sub><T and T<sub>2</sub>>T. (for example, it is recommended that T<sub>1</sub> 501 and T<sub>2</sub> 502 are close to T 401, e.g., T<sub>1</sub>=0.8T and T<sub>2</sub>=1.2T). An example of smoothing the two parts of the designed OETF curve is illustrated in FIG. 5 (for example the device 100 may performs the smoothing operation).

The device 100 may determine the two-segment logarithmic TF 105 ($E_{2seg\text{-}log\text{-}smooth}(Y)$) with smooth transition according to Eq. (9) as follow:

$$E_{2seg-log-smooth}(Y) = \begin{cases} 0, & Y = 0 \\ L_1(Y) = \log(Y) \cdot r \cdot s, & Y < T_1 \\ L_2(Y) = (\log(Y) - \log(T) \cdot (1-r)) \cdot s, & Y \geq T_2 \\ P(Y) = aY^3 + bY^2 + cY + d, & T_1 \leq Y < T_2 \end{cases} \qquad \text{Eq. (9)}$$

Furthermore, the device 100 may (uniquely) determine the four parameters, i.e., a, b, c and d of the cubic function P(Y), using the four boundary conditions according to Eq. (10) to Eq. (13) as follow:

$$P(T_1) = L_1(T_1) \qquad \text{Eq. (10)}$$

and,

$$P(T_2) = L_2(T_2) \qquad \text{Eq. (11)}$$

and,

$$\frac{dP(Y)}{dY}(T_1) = \frac{dL_1(Y)}{dY}(T_1) \qquad \text{Eq. (12)}$$

and,

$$\frac{dP(Y)}{dY}(T_2) = \frac{dL_2(Y)}{dY}(T_2) \qquad \text{Eq. (13)}$$

In some implementations not covered by the claims, but useful example for understanding the invention, the device 100 may determine the TF 105, for example, based on the two-segment logarithmic transfer function and the noise-variance stabilizing transfer function.

For example, the noise-variance stabilizing transfer function may be combined with the logarithmic transfer function to form a two-segment transfer function. The former one (the noise-variance stabilizing transfer function) is used for low pixel values where noise has stronger impact whereas the latter one (logarithmic transfer function) for higher pixel values. For example, the device 100 may determine the TF 105 ($E_{log\text{-}nvsta}(Y)$) based Eq. (14) as follow:

$$E_{log-nvsta}(Y) = \begin{cases} S(Y) = \frac{\sqrt{Y_c gk_c + \sigma_{read}^2 g^2 + \sigma_{adc}^2}}{\sqrt{Y_{max} gk_c + \sigma_{read}^2 g^2 + \sigma_{adc}^2}}, & Y < T \\ L(Y) = \frac{1-S(T)}{(\log(Y_{max})-\log(T)}(\log(Y) - \log(T)) + S(T), & Y \geq T \end{cases} \qquad \text{Eq. (14)}$$

Similar to the two-segment log transform (i.e., the first logarithmic part of the TF and the second logarithmic part of the TF), a smooth transition can also be applied here and TF ($E_{log\text{-}nvsta}(Y)$) may be estimated according to Eq. (15):

$$E_{log-nvsta}(Y) = \begin{cases} S(Y) = \frac{\sqrt{Y_c gk_c + \sigma_{read}^2 g^2 + \sigma_{adc}^2}}{\sqrt{Y_{max} gk_c + \sigma_{read}^2 g^2 + \sigma_{adc}^2}}, & Y < T_1 \\ L(Y) = \frac{1-S(T)}{(\log(Y_{max})-\log(T)}(\log(Y) - \log(T)) + S(T), & Y \geq T_2 \\ Q(Y) = mY^3 + nY^2 + p + q & T_1 \leq Y < T_2 \end{cases} \qquad \text{Eq. (15)}$$

The four parameters, i.e., m, n, p and q of the cubic function Q(Y) can be uniquely determined using the four boundary conditions in the following: Eq. (16) to Eq. (19):

$$Q(T_1) = S(T_1) \qquad \text{Eq. (16)}$$

and,

$$Q(T_2) = L(T_2) \qquad\qquad \text{Eq. (17)}$$

and,

$$\frac{dQ(Y)}{dY}(T_1) = \frac{dS(Y)}{dY}(T_1) \qquad\qquad \text{Eq. (18)}$$

and,

$$\frac{dQ(Y)}{dY}(T_2) = \frac{dL(Y)}{dY}(T_2) \qquad\qquad \text{Eq. (19)}$$

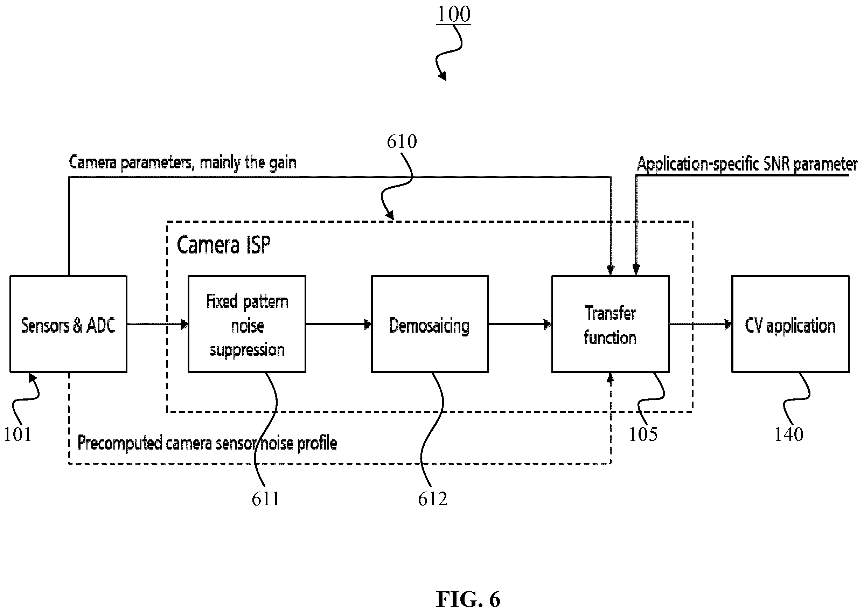

Reference is now made to FIG. 6, which is a schematic view of the device 100 comprising a TF 105 used in an image signal processing pipeline 610 of a camera, according to an embodiment of the present invention.

The device 100 of FIG. 6 is exemplary based on a CV digital camera. Moreover, the TF 105 is used (incorporated) in the image signal processing modules of the device 100 (camera).

The image signal processing (ISP) herein does not refer to a general concept of processing the image, but the specific systems in cameras, which convert sensor raw data, typical Bayer-pattern but possibly also other formats, to standard RGB or YUV format, which are appropriate for image and video storage in typical formats (for example, known conventional formats such as Joint Photographic Experts Group (JPEG), Portable Network Graphics (PNG), MPEG Layer-4 Audio (MP4), MKV, etc.).

The camera ISP 610 is using the transfer function 105 as it is depicted in FIG. 6. The raw data comes from the image sensor 101 (i.e., in FIG. 6 the image sensor and the ADC are in one unit) and goes into the camera ISP unit 610. Camera ISP unit 610 comprises the fixed pattern noise suppression unit 611 (may perform a denoising operation), and the demosaicing unit 612 and the determined TF 105. This is an exemplary (minimal) ISP setup and there may be more processing steps before and after the TF 105.

The output of the camera ISP 610, image or video either in RGB format or YUV format, is sent to the computer vision application unit 603, e.g., for face detection, face recognition, object detection, etc.

The implementation of the transfer function 105 may depend on three parameters. The first parameter is the image sensor noise profile, which is computed offline. The second parameter is the image sensor's gain. This parameter is either determined automatically by the camera based on illumination or other conditions or it may be set by the camera's user. The third parameter is the SNR value, and these values determines the threshold value T 401 in the TF 105. The SNR parameter is related to the CV application and is preset for every different CV application.

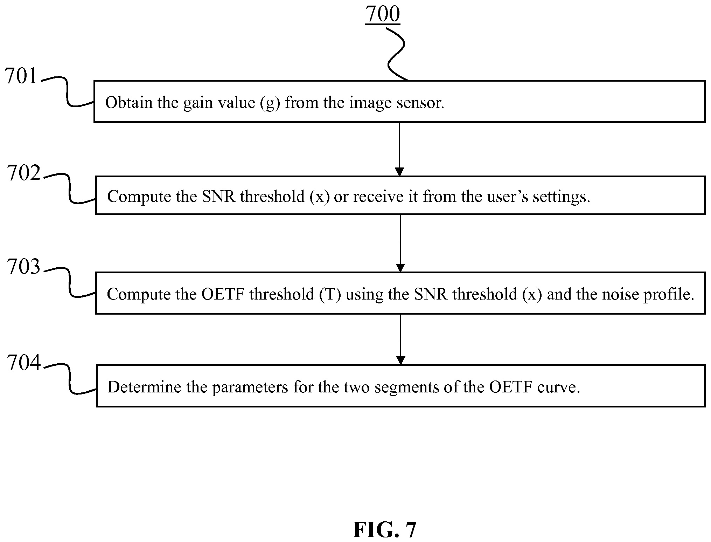

Reference is now made to FIG. 7, which is a schematic view of a flowchart of a procedure 700 for determining the OETF component.

At 701, the device 100 obtains the gain value (g) from the image sensor 101. For example, it may obtained dynamically.

At 702, the device 100 computes the SNR threshold (x) or receive it from the user's settings. For example, it may be computed dynamically.

At 703, the device 100 computes the OETF threshold (T) 401 using the SNR threshold (x) and the noise profile of the image sensor. For example, the noise profile may be computed offline, and may further be stored in the camera and remains the same.

At 704, the device 100 determines the parameters for the two segments of the OETF curve (the first part 121 and the second part 122 of the TF 105).

Moreover, when the gain value (g) or the SNR threshold (x) becomes a different value, the device 100 may compute the OETF again.

Moreover, the OETF curve may be used for determining the TF 105, e.g., the first part 121 of the TF 105 and/or the second part 122 of the TF 105.

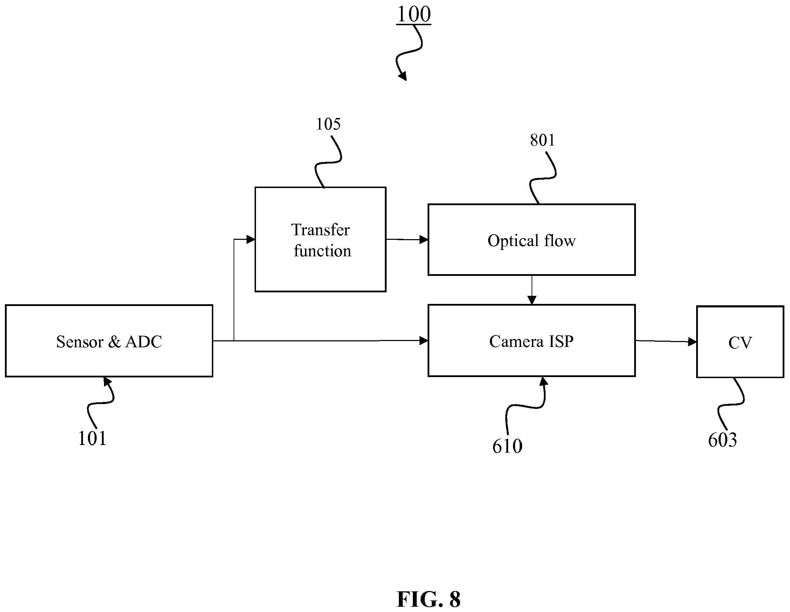

Reference is made to FIG. 8 which is a schematic view of the device 100 comprising a TF 105 used for generating optical flows for Bayer-pattern raw data, according to an embodiment of the present invention.

The device 100 may determine the TF 105 that may help generating optical flows for Bayer-pattern raw data. For example, the determined TF 105 is used to generate more accurate optical flow to assist the camera's ISP 610. For instance the transfer function 105 can also be used in the camera ISP 610 herein with a different parameter setting.

In this embodiment, the transfer function 105 is applied at an early stage of the device 100, i.e., directly applied to the raw data of the image sensor 101. The optical flow is generated using the output of the transfer function 105. The generated optical flow is forwarded to the camera's ISP 610. Note that, not all camera's ISP 610 depends on the transfer function 105, but some of the camera ISP may benefit from optical flow 801. The output of the camera ISP 610 is sent to the CV application unit 603.

Moreover, one function of the transfer function 105 is a pre-processing step of the raw data for optical flow 801. In this manner, the accuracy of the output of the optical flow unit 801 is expected to be improved. Higher accuracy of optical flow may lead to better quality of camera ISP output images. Finally, a higher accuracy of CV applications is expected. Note that the transfer function 105 may also be used in the camera ISP, for example, similar to the embodiment of FIG. 6, and for the parameter setting, the gain is the same and the SNR threshold may be different.

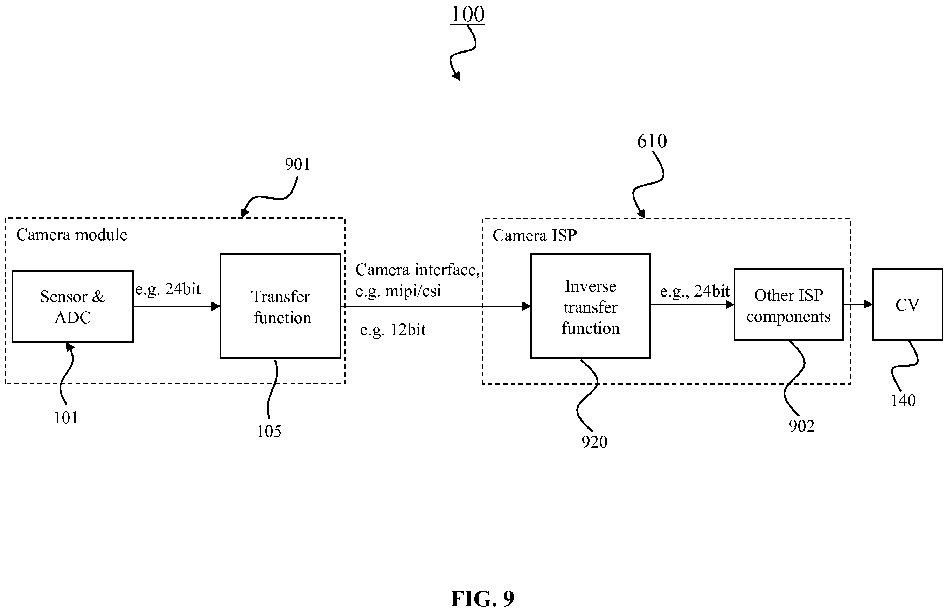

Reference is now made to FIG. 9, which is a schematic view of the device 100 comprising a TF 105 used on the sensor side and in a camera module 901 for performing a bit depth compression according to an embodiment of the present invention.

In the embodiment of FIG. 9, the device 100 determines the TF 105. Moreover, the transfer function 105 is used on the image sensor 101 side and in the camera's module 901 before compressing or quantizing the HDR raw data to lower bit depths.

The transfer function 105 may be used to solve the issue of limited bandwidth between the camera module 901 and the camera's ISP 610. The standard connection interface is the Mobile Industry Processor Interface (MIPI) / the Camera Serial Interface (CSI). Although there has been a variant supporting higher bit depth, for legacy or cost reason, the 12 bit bandwidth often exists in industry. The HDR camera sensor data, however, are often 20 bits or 24 bits, and there is a trend for even higher bit depth. Therefore, the HDR image data are quantized to 12 bit in this scenario. Direct compression of the image sensor data, however, results in poor performance. And the transfer function 105 may be used before quantization.

For example, the HDR sensor raw data, e.g. 24 bits, is transformed to nonlinear domain using the determined transfer function 105. Then it may be quantized or compressed to low bit depth, e.g., 12 bit to fit in the MIPI/CSI standard. For example, it may be uniform scalar quantization. Furthermore, there may be no predictive coding, no entropy coding, etc.

The camera ISP pipeline 610 comprises the inverse of the transfer function 920 and the other ISP components 902. At the beginning of the camera ISP pipeline 610, the inverse of the transfer function 920 is applied and 24 bit HDR raw data in the linear domain are reconstructed. For example, it is converted back to linear domain, because of the ISP processes linear data. These data may be further processed by the ISP pipeline and the output is used in CV applications unit 603. The role of the transfer function 105 in this embodiment may be to reduce the distortion between the original 24 bit data and the reconstructed 24 bit data for CV.

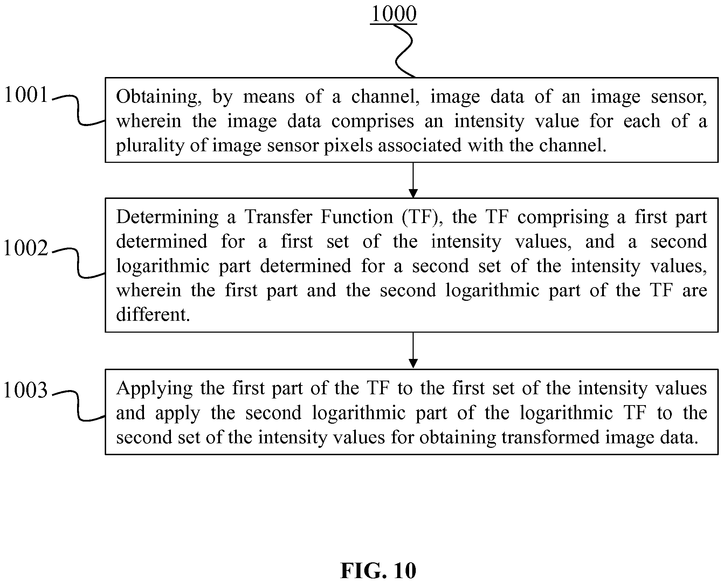

FIG. 10 shows a method 1000 according to an embodiment of the invention for pre-processing image data 103 for a computer vision application 140. The method 1000 may be carried out by the device 100, as it is described above.

The method 1000 comprises a step 1001 of obtaining, by means of a channel 102, image data 103 of an image sensor 101, wherein the image data 103 comprises an intensity value for each of a plurality of image sensor pixels associated with the channel 102.

The method 1000 further comprises a step 1002 of determining a TF 105, the TF 105 comprising a first part 121 determined for a first set of the intensity values, and a second logarithmic part 122 determined for a second set of the intensity values, wherein the first part 121 and the second part 122 of the TF 105 are different.

The method 1000 further comprises a step 1003 of applying the first part 121 of the TF 105 to the first set of the intensity values and apply the second logarithmic part 122 of the TF 105 to the second set of the intensity values, in order to obtain transformed image data 104.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

**Claims**

1. A device (100) for pre-processing image data (103) for a computer vision application (140), the device (100) being configured to:

    obtain, by means of a channel (102), image data (103) of an image sensor (101), wherein the image data (103) comprises an intensity value for each of a plurality of image sensor pixels associated with the channel (102), determine a Transfer Function (105), TF, the TF (105) comprising a first part (121) determined for a first set of the intensity values, and a second logarithmic part (122) determined for a second set of the intensity values, wherein the first part (121) and the second part (122) of the TF (105) are different, and

apply the first part (121) of the TF (105) to the first set of the intensity values and apply the second logarithmic part (122) of the TF (105) to the second set of the intensity values, in order to obtain transformed image data (104);

**characterised in that**

the device is further configured to determine a threshold intensity value (401) dividing the TF (105) into the first part (121) and the second part (122) of the TF (105) based on an SNR threshold.

2. The device (100) according to claim 1, wherein:

based on a logarithmic scale, a slope of the TF (105) in the first part (121) is smaller than a slope of the TF (105) in the second logarithmic part (122).

3. The device (100) according to claim 1 or 2, wherein:

the first part (121) of the TF (105) is based on a logarithmic function, or
the first part (121) of the TF (105) is a constant value.

4. The device (100) according to one of the claims 1-3, wherein:
the SNR threshold has a value within the range of -3dB and +3dB.

5. The device (100) according to one of claims 1 to 4, wherein:
the TF (105) is determined based on a noise profile of the image sensor (101).

6. The device (100) according to claim one of claims 1 to 5, wherein:
the SNR threshold is obtained based on a noise profile of the image sensor (101).

7. The device (100) according to one of claims 1 to 6, further configured to:

introduce a smoothing function (106) to the TF (105) for extending the threshold intensity value (401) to a threshold range comprising a first lower threshold (501) and a first upper threshold (502),
wherein the smoothing function (106) is for substituting the TF (105) in the threshold range, and
wherein the substitution of the TF (105) in the threshold range by the smoothing function (106) induces the TF to be differentiable for any intensity values.

8. The device (100) according to claim **7**, wherein:
the smoothing function (106) is based on a cubic function.

9. The device (100) according to claim 7 or 8, is further configured to:
obtain a ratio of the first part (121) to the second part (122) of the TF (105), wherein whether the substitution of the TF (105) in the threshold range by the smoothing function (106) occurs depends on the ratio of the first part (121) to the second part (122) of the TF (105).

10. The device (100) according to one of claims 1 to 9, further configured to:
apply an inverse logarithmic TF to the transferred image data for obtaining image data or video data in a determined format according to the computer vision application (140).

11. The device (100) according to one of claims 1 to 10, wherein:

- the device is implemented in one of:
- an Image Signal Processing, ISP, module of an imaging device,
- a part of an optical flow generation for an ISP of an imaging device,
- a camera module of a High Dynamic Range, HDR, imaging device.

12. A computer-implemented method method (1000) for pre-processing image data (103) for a computer vision application (140), the method (1000) comprising the steps of:

obtaining (1001), by means of a channel (102), image data (103) of an image sensor (101), wherein the image data (103) comprises an intensity value for each of a plurality of image sensor pixels associated with the channel (102),

determining (1002) a Transfer Function (105), TF, the TF (105) comprising a first part (121) determined for a first set of the intensity values, and a second logarithmic part (122) determined for a second set of the intensity values, wherein the first part (121) and the second part (122) of the TF (105) are different, and

applying (1003) the first part (121) of the TF (105) to the first set of the intensity values and apply the second logarithmic part (122) of the TF (105) to the second set of the intensity values, in order to obtain transformed image data (104);

**characterised in that**

the method further comprises: determining a threshold intensity value (401) dividing the TF (105) into the first part (121) and the second part (122) of the TF (105) based on an SNR threshold.

13. A computer program comprising instructions which, when the program is executed by a computer, causes the computer to carry out the method (1000) of claim 12.

**Patentansprüche**

1. Vorrichtung (100) zum Vorverarbeiten von Bilddaten (103) für eine Computersichtanwendung (140), wobei die Vorrichtung (100) dazu ausgelegt ist:

mittels eines Kanals (102) Bilddaten (103) eines Bildsensors (101) zu erhalten, wobei die Bilddaten (103) einen Intensitätswert für jeden einer Vielzahl von dem Kanal (102) zugeordneten Bildsensorpixeln umfassen,

eine Übertragungsfunktion (105), TF, zu bestimmen, wobei die TF (105) einen ersten Teil (121), der für einen ersten Satz der Intensitätswerte bestimmt ist, und einen zweiten, logarithmischen Teil (122), der für einen zweiten Satz der Intensitätswerte bestimmt ist, umfasst, wobei der erste Teil (121) und der zweite Teil (122) der TF (105) verschieden sind, und

den ersten Teil (121) der TF (105) auf den ersten Satz der Intensitätswerte anzuwenden und den zweiten, logarithmischen Teil (122) der TF (105) auf den zweiten Satz der Intensitätswerte anzuwenden, um transformierte Bilddaten (104) zu erhalten;

**dadurch gekennzeichnet, dass**

die Vorrichtung ferner dazu ausgelegt ist, einen Schwellenintensitätswert (401), der die TF (105) in den ersten Teil (121) und den zweiten Teil (122) der TF (105) unterteilt, basierend auf einem SNR-Schwellenwert zu bestimmen.

2. Vorrichtung (100) nach Anspruch 1, wobei:
basierend auf einer logarithmischen Skala eine Steigung der TF (105) im ersten Teil (121) kleiner als eine Steigung der TF (105) im zweiten, logarithmischen Teil (122) ist.

3. Vorrichtung (100) nach Anspruch 1 oder 2, wobei:

der erste Teil (121) der TF (105) auf einer logarithmischen Funktion basiert, oder
der erste Teil (121) der TF (105) ein konstanter Wert ist.

4. Vorrichtung (100) nach einem der Ansprüche 1-3, wobei:
der SNR-Schwellenwert einen Wert im Bereich von -3 dB bis +3 dB aufweist.

5. Vorrichtung (100) nach einem der Ansprüche 1 bis 4, wobei:
die TF (105) basierend auf einem Rauschprofil des Bildsensors (101) bestimmt wird.

6. Vorrichtung (100) nach einem der Ansprüche 1 bis 5, wobei:
der SNR-Schwellenwert basierend auf einem Rauschprofil des Bildsensors (101) erhalten wird.

7. Vorrichtung (100) nach einem der Ansprüche 1 bis 6, ferner dazu ausgelegt:

eine Glättungsfunktion (106) in die TF (105) einzuführen, um den Schwellenintensitätswert (401) zu einem Schwellenbereich zu erweitern, der einen ersten unteren Schwellenwert (501) und einen ersten oberen Schwellenwert (502) umfasst,
wobei die Glättungsfunktion (106) zum Ersetzen der TF (105) im Schwellenwertbereich dient, und
wobei das Ersetzen der TF (105) im Schwellenwertbereich durch die Glättungsfunktion (106) bewirkt, dass die TF für beliebige Intensitätswerte differenzierbar ist.

8. Vorrichtung (100) nach Anspruch 7, wobei:
die Glättungsfunktion (106) auf einer kubischen Funktion basiert.

9. Vorrichtung (100) nach Anspruch 7 oder 8, ferner dazu ausgelegt:
ein Verhältnis des ersten Teils (121) zum zweiten Teil (122) der TF (105) zu erhalten, wobei es vom Verhältnis des ersten Teils (121) zum zweiten Teil (122) der TF (105) abhängt, ob das Ersetzen der TF (105) im Schwellenwertbereich durch die Glättungsfunktion (106) stattfindet.

10. Vorrichtung (100) nach einem der Ansprüche 1 bis 9, ferner dazu ausgelegt:
eine inverse logarithmische TF auf die übertragenen Bilddaten anzuwenden, um Bilddaten oder Videodaten in einem bestimmten Format gemäß der Computersichtanwendung (140) zu erhalten.

11. Vorrichtung (100) nach einem der Ansprüche 1 bis 10, wobei:

- die Vorrichtung in einem von Folgendem implementiert ist:
- einem Bildsignalverarbeitungs-, ISP-, Modul einer Bildgebungsvorrichtung,
- einem Teil einer optischen Flusserzeugung für eine ISP einer Bildgebungsvorrichtung,
- einem Kameramodul einer Bildgebungsvorrichtung mit hohem Dynamikbereich, HDR.

12. Computerimplementiertes Verfahren (1000) zum Vorverarbeiten von Bilddaten (103) für eine Computersichtanwendung (140), wobei das Verfahren (1000) die folgenden Schritte umfasst:

Erhalten (1001) von Bilddaten (103) eines Bildsensors (101) mittels eines Kanals (102), wobei die Bilddaten (103) einen Intensitätswert für jeden einer Vielzahl von dem Kanal (102) zugeordneten Bildsensorpixeln umfassen,
Bestimmen (1002) einer Übertragungsfunktion (105), TF, wobei die TF (105) einen ersten Teil (121), der für einen ersten Satz der Intensitätswerte bestimmt wird, und einen zweiten, logarithmischen Teil (122), der für einen zweiten Satz der Intensitätswerte bestimmt wird, umfasst, wobei der erste Teil (121) und der zweite Teil (122) der TF (105) verschieden sind, und
Anwenden (1003) des ersten Teils (121) der TF (105) auf den ersten Satz der Intensitätswerte und Anwenden des zweiten, logarithmischen Teils (122) der TF (105) auf den zweiten Satz der Intensitätswerte, um transformierte Bilddaten (104) zu erhalten;
**dadurch gekennzeichnet, dass**
das Verfahren ferner umfasst: Bestimmen eines Schwellenintensitätswerts (401), der die TF (105) basierend auf einem SNR-Schwellenwert in den ersten Teil (121) und den zweiten Teil (122) der TF (105) unterteilt.

13. Computerprogramm, umfassend Anweisungen, die, wenn das Programm durch einen Computer ausgeführt wird, den Computer veranlassen, das Verfahren (1000) nach Anspruch 12 durchzuführen.

**Revendications**

1. Dispositif (100) de prétraitement de données d'image (103) pour une application de vision par ordinateur (140), le dispositif (100) étant configuré pour :

obtenir, au moyen d'un canal (102), des données d'image (103) d'un capteur d'image (101), les données d'image (103) comprenant une valeur d'intensité pour chacun d'une pluralité de pixels de capteur d'image associés au canal (102),
déterminer une Fonction de Transfert (105), FT, la FT (105) comprenant une première partie (121) déterminée pour un premier ensemble des valeurs d'intensité, et une seconde partie logarithmique (122) déterminée pour un second ensemble des valeurs d'intensité, la première partie (121) et la seconde partie (122) de la FT (105) étant différentes, et
appliquer la première partie (121) de la FT (105) au premier ensemble des valeurs d'intensité et appliquer la seconde partie logarithmique (122) de la FT (105) au second ensemble des valeurs d'intensité, afin d'obtenir des données d'image transformées (104) ;
**caractérisé en ce que** le dispositif est en outre configuré pour déterminer une valeur seuil d'intensité (401) divisant la FT (105) en la première partie (121) et la seconde partie (122) de la FT (105) sur la base d'un seuil SNR.

**2.** Dispositif (100) selon la revendication 1,
sur une échelle logarithmique, une pente de la FT (105) dans la première partie (121) étant plus petite qu'une pente de la FT (105) dans la seconde partie logarithmique (122).

**3.** Dispositif (100) selon la revendication 1 ou 2,
la première partie (121) de la FT (105) étant basée sur une fonction logarithmique, ou la première partie (121) de la FT (105) étant une valeur constante.

**4.** Dispositif (100) selon l'une des revendications 1 à 3,
le seuil SNR ayant une valeur comprise dans la plage de -3dB à +3dB.

**5.** Dispositif (100) selon l'une des revendications 1 à 4,
la FT (105) étant déterminée sur la base d'un profil de bruit du capteur d'image (101).

**6.** Dispositif (100) selon l'une des revendications 1 à 5,
le seuil SNR étant obtenu sur la base d'un profil de bruit du capteur d'image (101).

**7.** Dispositif (100) selon l'une des revendications 1 à 6, configuré en outre pour :

introduire une fonction de lissage (106) dans la FT (105) pour étendre la valeur seuil d'intensité (401) à une plage de seuil comprenant un premier seuil inférieur (501) et un premier seuil supérieur (502),
la fonction de lissage (106) étant destinée à substituer la FT (105) dans la plage de seuil, et
la substitution de la FT (105) dans la plage de seuil par la fonction de lissage (106) rendant la FT différentiable pour toutes valeurs d'intensité.

**8.** Dispositif (100) selon la revendication 7,
la fonction de lissage (106) étant basée sur une fonction cubique.

**9.** Dispositif (100) selon la revendication 7 ou 8, configuré en outre pour :
obtenir un rapport de la première partie (121) à la seconde partie (122) de la FT (105), la substitution de la FT (105) dans la plage de seuil par la fonction de lissage (106) dépendant du rapport de la première partie (121) à la seconde partie (122) de la FT (105).

**10.** Dispositif (100) selon l'une des revendications 1 à 9, configuré en outre pour :
appliquer une FT logarithmique inverse aux données d'image transférées pour obtenir des données d'image ou des données vidéo dans un format déterminé en fonction de l'application de vision par ordinateur (140).

**11.** Dispositif (100) selon l'une des revendications 1 à 10,

- le dispositif étant mis en œuvre dans l'un des éléments suivants :
- un module de traitement de signal d'image, ISP, d'un dispositif d'imagerie,
- une partie d'une génération de flux optique pour un ISP d'un dispositif d'imagerie,
- un module de caméra d'un dispositif d'imagerie à grande plage dynamique, HDR.

**12.** Procédé mis en œuvre par ordinateur (1000) pour le prétraitement de données d'image (103) pour une application de vision par ordinateur (140), le procédé (1000) comprenant les étapes suivantes :

l'obtention (1001), au moyen d'un canal (102), de données d'image (103) d'un capteur d'image (101), les données d'image (103) comprenant une valeur d'intensité pour chacun d'une pluralité de pixels de capteur d'image associés au canal (102),
la détermination (1002) d'une Fonction de Transfert (105), FT, la FT (105) comprenant une première partie (121) déterminée pour un premier ensemble des valeurs d'intensité, et une seconde partie logarithmique (122) déterminée pour un second ensemble des valeurs d'intensité, la première partie (121) et la seconde partie (122) de la FT (105) étant différentes, et
l'application (1003) de la première partie (121) de la FT (105) au premier ensemble des valeurs d'intensité et l'application de la seconde partie logarithmique (122) de la FT (105) au second ensemble des valeurs d'intensité, afin d'obtenir des données d'image transformées (104) ;
**caractérisé en ce que** le procédé comprend en outre : la détermination d'une valeur seuil d'intensité (401) divisant la FT (105) en la première partie (121) et la seconde partie (122) de la FT (105) sur la base d'un seuil SNR.

13. Programme informatique comprenant des instructions qui, lorsque le programme est exécuté par un ordinateur, amènent l'ordinateur à mettre en œuvre le procédé (1000) selon la revendication 12.

**FIG. 1**

FIG. 2

**FIG. 3**

EP 4 058 976 B1

FIG. 4B

FIG. 4A

FIG. 5

**FIG. 6**

EP 4 058 976 B1

$\underline{700}$

701 — Obtain the gain value (g) from the image sensor.

702 — Compute the SNR threshold (x) or receive it from the user's settings.

703 — Compute the OETF threshold (T) using the SNR threshold (x) and the noise profile.

704 — Determine the parameters for the two segments of the OETF curve.

**FIG. 7**

EP 4 058 976 B1

FIG. 8

**FIG. 9**

EP 4 058 976 B1

EP 4 058 976 B1

1000

1001 — Obtaining, by means of a channel, image data of an image sensor, wherein the image data comprises an intensity value for each of a plurality of image sensor pixels associated with the channel.

1002 — Determining a Transfer Function (TF), the TF comprising a first part determined for a first set of the intensity values, and a second logarithmic part determined for a second set of the intensity values, wherein the first part and the second logarithmic part of the TF are different.

1003 — Applying the first part of the TF to the first set of the intensity values and apply the second logarithmic part of the logarithmic TF to the second set of the intensity values for obtaining transformed image data.

**FIG. 10**

1100

**Sensor** 1110

Photon noise

Readout noise

ADC noise

Photodiode 1111

Amplifier 1112

ADC 1113

**Image Signal Processor** 1120

HDR merging 1121

Demosaicing 1122

Transfer function 1123

CV application 1130

**FIG. 11**

**EP 4 058 976 B1**

**Patent documents cited in the description**

- EP 3131284 A
- EP 2445214 A
- US 2018075588 A